(19) Europäisches Patentamt

European Patent Office

Office européen des brevets

(11) **EP 3 198 708 B1**

(12) **EUROPEAN PATENT SPECIFICATION**

(45) Date of publication and mention
of the grant of the patent:
**12.02.2020 Bulletin 2020/07**

(21) Application number: **15843266.6**

(22) Date of filing: **16.09.2015**

(51) Int Cl.:
*H02K 1/24* *(2006.01)* *H02K 1/27* *(2006.01)*
*H02K 1/28* *(2006.01)* *H02K 15/03* *(2006.01)*
*H02K 21/22* *(2006.01)* *H02K 29/03* *(2006.01)*
*B60L 50/00* *(2019.01)* *B60L 50/90* *(2019.01)*

(86) International application number:
**PCT/CA2015/050902**

(87) International publication number:
**WO 2016/044925 (31.03.2016 Gazette 2016/13)**

(54) **RELUCTANCE ASSISTED EXTERNAL ROTOR PMSM**

PMSM MIT RELUKTANZUNTERSTÜTZTEM AUSSENLÄUFER

PMSM À ROTOR EXTERNE ASSISTÉE PAR RÉLUCTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2014 US 201462054565 P**

(43) Date of publication of application:
**02.08.2017 Bulletin 2017/31**

(73) Proprietor: **TM4 Inc.
Boucherville, Quebec J4B 8P1 (CA)**

(72) Inventors:
• **SHI, Ruisheng
Montreal, Québec H4N 3K9 (CA)**
• **GHARAKHANI, Arbi
Verdun, Québec H3E 1E5 (CA)**

(74) Representative: **Pfenning, Meinig & Partner mbB
Patent- und Rechtsanwälte
Joachimsthaler Straße 10-12
10719 Berlin (DE)**

(56) References cited:
**EP-A1- 0 445 308** **JP-A- 2002 136 005**
**JP-A- 2002 281 722** **JP-A- 2014 090 550**
**US-A- 5 936 322** **US-A1- 2005 200 222**
**US-A1- 2007 046 124** **US-A1- 2010 026 126**
**US-B1- 6 366 037** **US-B2- 7 262 526**

**Description**

FIELD

The present disclosure relates to electric machines. More specifically, the present disclosure is concerned with a reluctance assisted external rotor PMSM (Permanent Magnet Synchronous Machine) having an external rotor.

BACKGROUND

Higher gas prices, air pollution and other environmental concerns were the motivation behind the attempts to replace internal combustion engines with electric traction systems in the automotive application. Among different types of electric traction systems, machines with permanent magnet materials demonstrate a great potential due to their high torque densities and great efficiencies, which normally lead to compact sizes and higher vehicle autonomy.

In general, traction motors of electric power trains are designed to have wide torque-speed range (to be used with a single gear ratio), high torque at low speed (for better acceleration) and acceptable power at maximum speed. In addition these machines should have high efficiency values in mid speed range to increase the autonomy of the vehicle. The available space for such machines is limited due to the limitations of the application. The cost is another crucial factor. These requirements impose different constraints to be satisfied during the design process, which makes it a challenging task.

In recent years there is a trend towards direct drive machines for heavy-duty applications, which removes the need to use a gearbox in the powertrain. This helps to reduce the cost and also improves the efficiency and reliability of the whole system.

Rear-earth permanent magnets are generally used in the traction motors, mainly due to their good performances. However, the earth's resources are not infinite and rare-earth permanent magnets are getting very expensive. Accordingly, the reduction of the usage of rear-earth permanent magnets in electric motors is being studied.

Document JP2002 281722 A proposes to reduce torque ripple in a permanent magnet electric motor by providing magnets on a rotor which according to a first embodiment are divided in two magnet blocks 11 a and 11 b displaced in the circumferential direction at one end side and the other end side and according to a second embodiment are angled with respect to the rotor axis.

BRIEF DESCRIPTION OF THE INVENTION

The invention is defined in the attached claim 1. Specific embodiments are the object of dependent claims.

BRIEF DESCRIPTION OF THE DRAWINGS

In the appended drawings:

Figure 1 schematically illustrates an external rotor electric machine;

Figure 2 schematically illustrates a typical rotor configuration of an external rotor SPM machine;

Figure 3 schematically illustrates an added lamination strip between the magnets and the rigid rotor;

Figure 4 schematically illustrates the shifting of magnets in an external rotor machine according to a first illustrative embodiment;

Figure 5 is a graph illustrating the cogging torque reduction due to pole shifting;

Figure 6 is a graph illustrating the torque ripple reduction due to pole shifting;

Figure 7 is a graph illustrating a reference SPM vs. the external rotor machine of Figure 4; and

Figure 8 is a front sectional elevation view of an external rotor electric machine according to an illustrative example.

DETAILED DESCRIPTION

The reduction of the quantity of permanent magnets while decreasing the cogging torque and the torque ripples is achieved by placing different size of magnetically susceptible protrusions between magnets, thereby shifting some of the poles.

More specifically, in accordance to an illustrative embodiment, there is provided an external rotor electric machine comprising an internal stator and an external rotor coaxial to the internal stator. The external rotor includes an inner surface facing the internal stator. The external rotor includes permanent magnets arranged in a circumferential direction on the internal surface of the rotor, and magnetically susceptible protrusions respectively arranged between adjacent permanent magnets. The magnetically susceptible protrusions being so configured and sized as to position the magnets so as to reduce cogging torque and torque ripple.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or open-ended and do not exclude additional, unrecited elements or process steps.

In the present specification and in the appended claims, various terminology which is directional, geometrical and/or spatial in nature such as "longitudinal", "horizontal", "front", rear", "upwardly", "downwardly", etc. is used. It is to be understood that such terminology is used for ease of description and in a relative sense only and is not to be taken in any way as a limitation upon the scope of the present disclosure.

The expression "connected" should be construed herein and in the appended claims broadly so as to include any cooperative or passive association between mechanical parts or components. For example, such parts may be assembled together by direct coupling, or indirectly coupled using further parts. The coupling can also be remote, using for example a magnetic field or else.

Other objects, advantages and features of the present reluctance assisted external rotor PMSM will become more apparent upon reading of the following non-restrictive description of illustrative embodiments thereof, given by way of example only with reference to the accompanying drawings.

Generally stated, illustrative embodiments are provided with magnetically susceptible protrusions provided between adjacent permanent magnets. These protrusions are not equal in size due to the magnet shifting intended to reduce the cogging torque and the torque ripples.

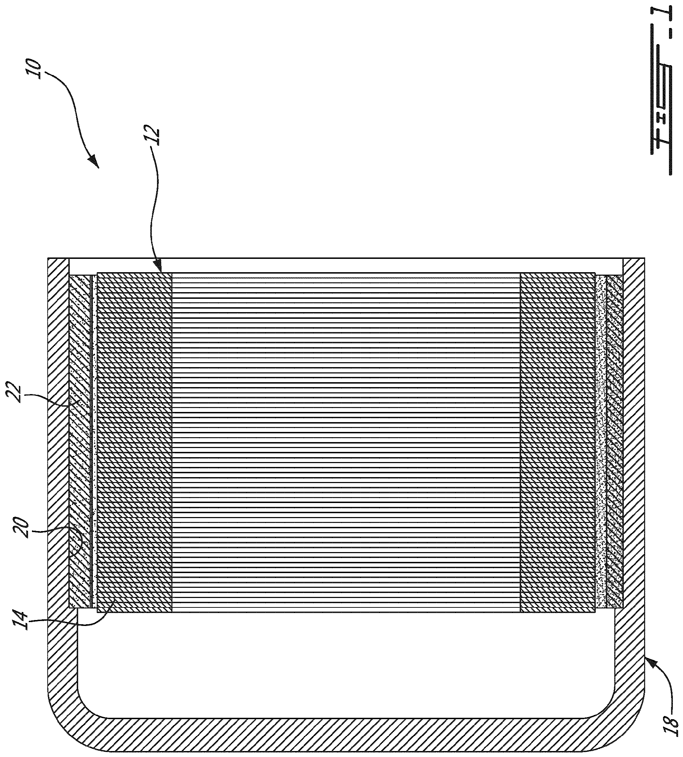

Turning now to the appended drawings, an external rotor electric machine 10 is illustrated in a side sectional view in Figure 1. The electric machine 10 includes an internal stator 12 made of stacked laminations 14 and provided with coils (not shown) conventionally placed in outwardly facing slots. The electric machine 10 also includes an external cylindrical rotor 18 having an internal surface 20 to which are mounted permanent magnets 22.

In any electric machine, torque is resultant of the interaction between rotor and stator fluxes. In the surface mounted permanent magnet machines (PMSM), rare earth magnetic materials are the source of the rotor flux, while current is the source of the stator flux. In general it is possible to maximize the torque per current ratio by controlling the angle of the current in respect to the rotor magnet flux vector. This torque is represented by the following equation.

$$T = K\_1 \; \varphi\_m \; Iq \quad (1)$$

In synchronous reluctance machines, the torque is produced due to the anisotropy of the magnetic circuit and thus the flux path. The different reluctances of D and Q axes and tendency of the rotor to align itself with the lowest reluctance path lead to production of a torque as shown in the following equation.

$$T = K\_2 \; (Ld\text{-}Lq)^*IdIq \quad (2)$$

Inset permanent magnet machines enjoy both components of the torque as shown below.

$$T = K\_1 \; \varphi\_m \; Iq + K\_2 \; (Ld\text{-}Lq)^*IdIq \quad (3)$$

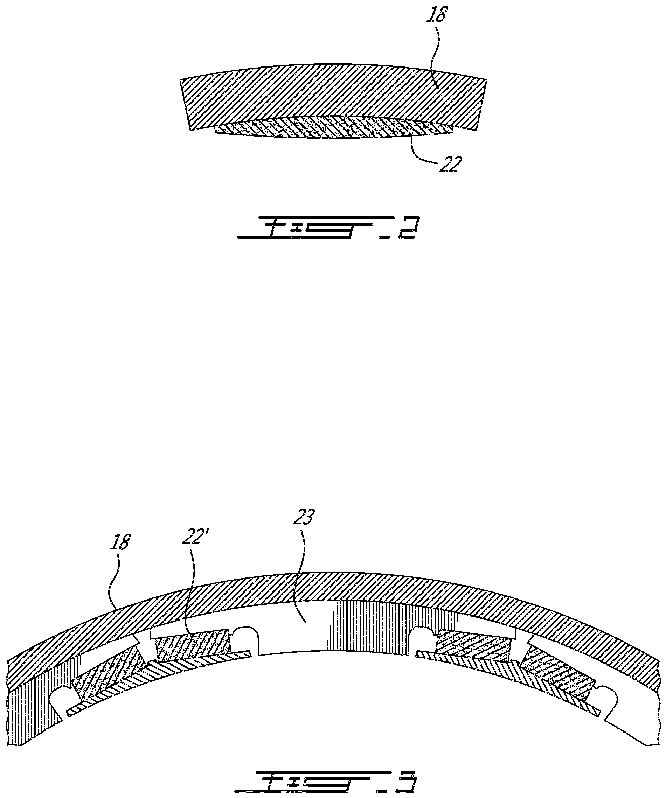

Generally, the advantage of an external rotor machine is its higher air-gap radius, which leads to a higher torque for the same magnetic force. To keep this advantage, the thickness of the rotor 18 should be kept as thin as possible. The rotor is normally made of rigid carbon steel in order tolerate the centrifugal forces and the vibration as shown in Figures 1 and 2.

In order to create the reluctance torque, significant anisotropy (saliency) may be created in the rotor magnetic circuit, which is a demanding task due to the limited available space. In addition, this causes higher eddy current losses due to the introduced anisotropy. Thus, it is generally not practical to use carbon steel materials to achieve this goal. On the other hand, a thin rotor made of lamination cannot normally support the centrifugal forces present at high speeds. Thus, as can be seen in Figure 3, a strip of lamination 23 is added between the magnets 22' and the rigid carbon steel rotor 18 to achieve both the required saliency and the rigidity requirements.

The dimensions of the magnets 22' and the rotor lamination strips 23 are generally optimized by using a stochastic optimization algorithm and by considering the design constraints typically found in automotive applications.

The final solution after optimization had considerably less magnets in comparison to the reference SPM machine with the same dimensions. Besides, performance of the proposed machine showed noticeable improvements compared to the original SPM machine. The detailed comparison is given hereinbelow.

One of the drawbacks of using reluctance torque is the associated cogging torque and the torque ripples. In general, it is interesting to keep the torque pulsations to an acceptable level. The selected approach to reduce the torque ripples is to apply pole-shifting topology.

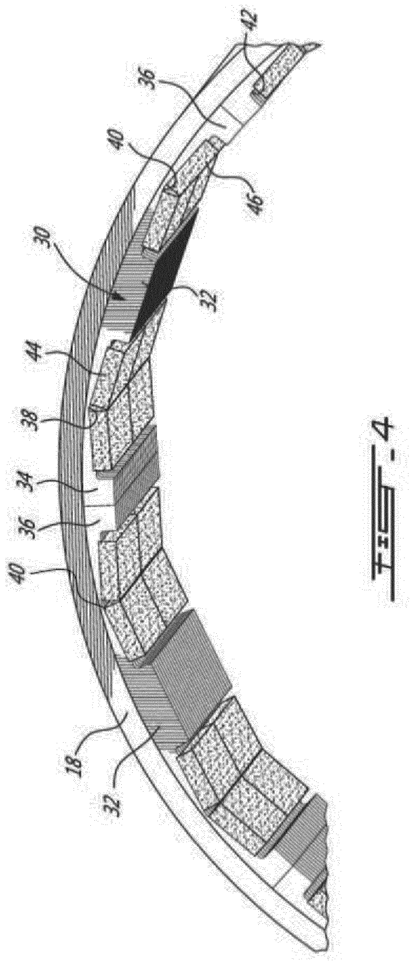

In theory, it is possible to achieve torque harmonic cancelation by shifting the magnets circumferentially as shown in Figure 4.

In many topologies, the dominant component of the torque harmonic is dependent to the number of slots per pole per phase (SPP). As an instance a three phase machine with SPP=1 has six slots per pole pairs which leads to the 6th harmonic of the torque. In case of a machine with SPP=2, the dominant harmonic is the 12th. To cancel the 6th harmonics, the magnets may be shifted by 30 electrical degrees. While to cancel the 12th harmonics, 15 electrical degrees shifting is generally sufficient.

The pole shifting approach illustrated in Figure 4 can simplify the manufacturing process. However, it is physically limited by the geometry of the machine and may cause higher saturation levels in the proposed topology. In Figure 4, individual ring segments 30 are provided with a central protrusion 32, two lateral protrusions 34, 36 and two permanent magnet receiving portions 38 and 40, one lateral protrusion 34, 36 and one permanent magnet receiving portion 38, 40 located on each side of the central protrusion 32.

As can be seen from Figure 4, the ring segments 30 includes four rounded notches 42 between the protrusions 32, 34, 36 and respective lateral magnet-receiving portions. Within a segment 30, the notches 42 together define channels between the protrusions and respective magnets to thereby prevent the magnetic field to directly go from the magnets to the protrusions. Each notch 42 defines, with the magnet-receiving portion, a small shoulder that helps positioning and maintaining in place the magnet.

Magnets 44 inserted in the magnet receiving portions 38 have their north pole facing towards the stator while magnets 46 inserted in the magnet receiving portions 40 have their south pole facing towards the stator.

The central protrusion 32 has a width that is larger than the combined with of the lateral protrusions 34 and 36. According, the spacing between adjacent magnets is not equal thereby yielding pole shifting. As mentioned hereinabove the shifting angle depends on the motor topology.

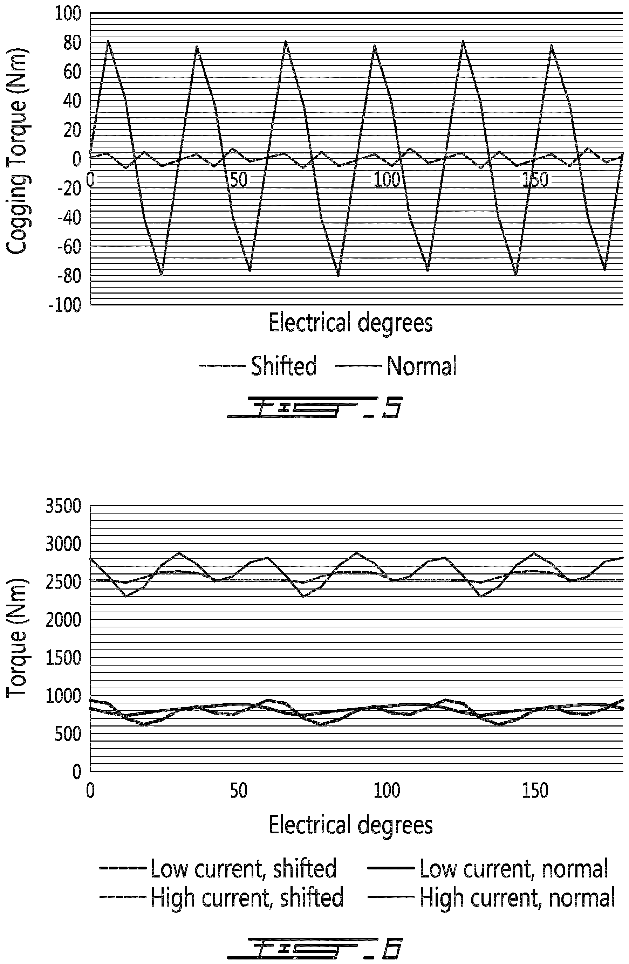

The cogging torque and torque ripple reductions due to the pole shifting method are compared in Figures 5 and 6 respectively, with the same machine without pole shifting. Based on the illustrated results, it can be concluded that a significant reduction can be achieved by the proposed technique.

In Figure 6, the performance of the proposed reluctance assisted external rotor PM machine is compared with the original surface mounted PM machine. For a fair comparison the same stator assembly is used in both machines. The comparison is made for two different scenarios. In the first scenario, the maximum required torque of the new machine at low speed condition is assumed to be the same as SPM machine. In the second one, the maximum speed of the machine is kept equal to the maximum speed of the SPM machine.

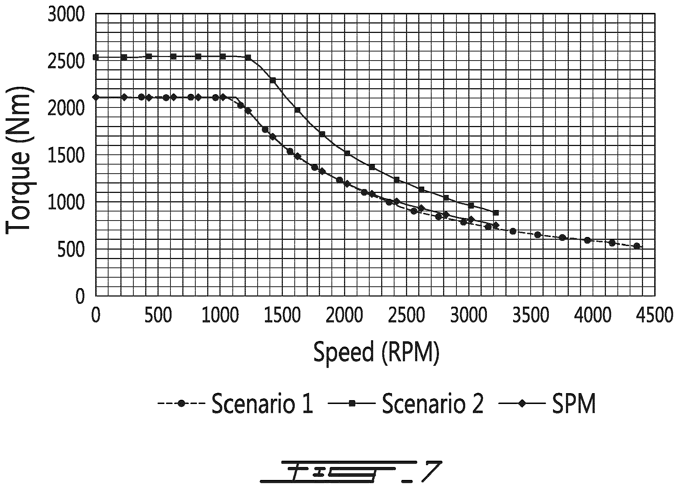

In the Figure 7, the torque-speed characteristics of the two scenarios are compared with the reference SPM machine.

Based on Figure 7 following conclusions can be made:

In the first scenario, 30% maximum speed increase has been achieved in comparison to the reference SPM machine with around 35% less magnet.

In the second scenario, maximum torque has been increased by 20% with around 15% less magnet. The percentage of the torque increase in scenario 2 is lower than the speed increase percentage in scenario 1. This is believed to be due to the core saturation as well as contribution of the reluctance torque.

In addition to these facts, higher D axis inductance of the reluctance assisted machine leads to easier field weakening, lower short circuit current and thus capability of tolerating short circuit current continuously. This means it is easier to design a fault tolerant machine with the proposed reluctance assisted concept. Finally higher inductance means lower eddy current losses due to the PWM switching which is a very important factor in determining the high speed continuous power of the machine.

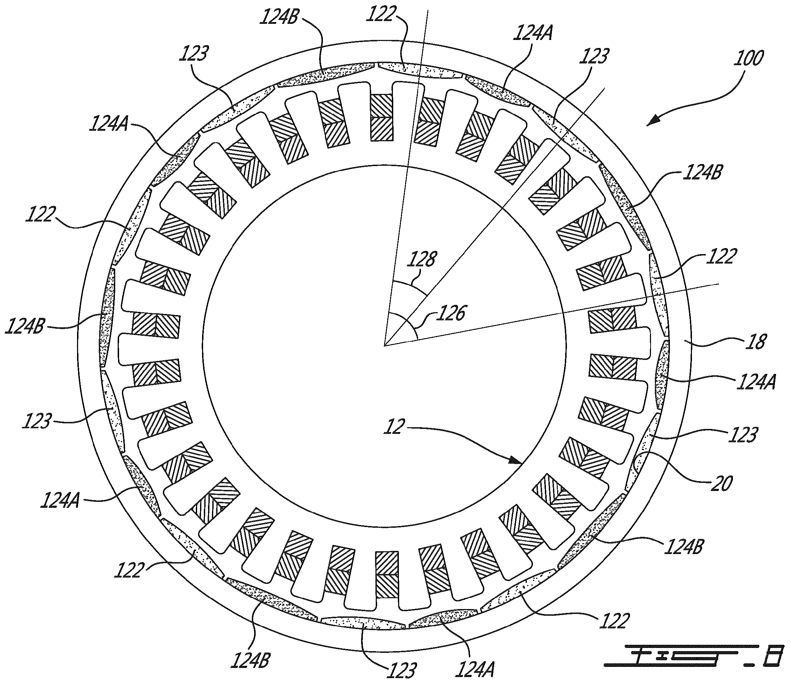

Turning now to exemplary Figure 8 of the appended drawings, an electric machine 100 according to a second illustrative embodiment will be described.

Generally stated, while the embodiment described hereinabove and illustrated in Figure 4 uses stacks of laminations to embody the magnetically susceptible protrusions provided between adjacent permanent magnets, is it proposed to insert blocks of soft magnetic material (aka ferromagnetic material) such as, for example, SMC (Soft Magnetic Composite) or magnetic powders, to embody these protrusions in the electric machine 100. This addition of SMC blocks reduces the quadrature axis reluctance since it decreases the air gap thickness in the quadrature axis flux path. Accordingly, this creates a stronger supplemental reluctance torque in the electric machine, which improves performances thereof.

It has been found that by using powder metallurgy, it is possible to produces SMC blocks suitable to be positioned between adjacent permanent magnets and therefore replace some of the permanent magnets in an external rotor electric machine. Magnetic powders such as ATOMET 1 and ATOMET 3 manufactured by Rio Tinto have been found suitable to make the SMC blocks.

Permanent magnets 122 have their north pole facing the stator 12 and permanent magnets 123 have their south pole facing the stator 12.

As can be better seen from Figure 8, which is a front elevation view of the electric machine 100, the SMC blocks 124A and 124B and the permanent magnets 122, 123 are alternatively mounted to the internal surface 20 of the rotor 18.

One skilled in the art will understand that an adhesive (not shown) may be provided between the SMC blocks 124A, 124B and the rotor 18 and between the magnets 122, 123 and the rotor 18. Alternatively, other mechanical elements (not shown) can be used to adequately mount the SMC blocks and the magnets to the rotor 18.

In the electric machine 100, the permanent magnets 122 and 123 are not equally spaced and as a consequence, two sizes of SMC blocks 124A and 124B are present.

Indeed, as mentioned hereinabove, to decrease the cogging torque and the torque ripple in the machine 100, the permanent magnets 122, 123 are not equally spaced on the internal surface 20 of the rotor 18. As can be seen from this figure, the 360 degrees electric angle 126 separating two consecutive magnets 122 having their north pole facing the stator 12 is not conventionally divided in two by the magnet 123 positioned therebetween.

Indeed, the angle shifting of poles depends on the design requirements. As mentioned hereinabove, 30 electric degree shifting is chosen to reduce the 6th torque harmonic while 15 degree is chosen to reduce the 12th torque harmonic, and so on.

In the case shown in Figure 8, 15 degree shifting is applied in this configuration since the cogging and torque ripple reduction are required in the 12th harmonic. Indeed, an electric angle 128 is 165 degrees.

The SMC blocks 124A and 124B are therefore not identical in size to keep a substantially equal distance between adjacent blocks and magnets.

As will be understood by one skilled in the art, the electric machines 10 and 100 illustrated herein and described hereinabove are schematic and lack many required elements for their operation. Indeed, only the elements relating to the comprehension of the external rotor electric machine have been shown and discussed.

One skilled in the art will understand that the reduction of the quantity of permanent magnet material used can be realized by changing the size of the permanent magnets and of the SMC blocks.

It is to be understood that the reluctance assisted external rotor PMSM is not limited in its application to the details of construction and parts illustrated in the accompanying drawings and described hereinabove. The reluctance assisted external rotor PMSM is capable of other embodiments and of being practiced in various ways. It is also to be understood that the phraseology or terminology used herein is for the purpose of description and not limitation.

**Claims**

1. An external rotor electric machine (10) comprising:

    an internal stator (12); and
    an external rotor (18) coaxial to the internal stator; the external rotor including an inner surface (20) facing the internal stator; the external rotor including permanent magnets (22) arranged in a circumferential direction on the internal surface of the rotor, and magnetically susceptible protrusions (23, 32, 34, 36) respectively arranged between adjacent permanent magnets; the magnetically susceptible protrusions being so configured and sized as to position the magnets with a non equal angular spacing between consecutive adjacent magnets so as to reduce cogging torque and torque ripple,
    wherein the protrusions (23, 32, 34, 36) consist of individual ring segments (30) including a central protrusion (32), two lateral protrusions (34, 36) and two permanent magnet receiving portions (38, 40), one lateral protrusion (34, 36) and one permanent magnet receiving portion (38, 40) located on each side of the central protrusion,
    wherein each permanent magnet receiving portion (38, 40) is located between the central protrusion (32) and one of the lateral protrusions (34, 36),
    and rounded notches (42) between the central and lateral protrusions (32, 34, 36) and the respective permanent magnet receiving portions (38, 40).

2. The external rotor electric machine as recited in claim 1, wherein the protrusions consist of stacks of laminations (14) made of soft magnetic material.

3. The external rotor electric machine as recited in claim 2, wherein the individual ring segments (30) are se configured and sized as to be applied to the internal surface of the rotor (18).

4. The external rotor electric machine as recited in claim 3, wherein the sizes of the central and lateral protrusions are such that the central protrusion (32) has a width that is larger than the combined width of the lateral protrusions (34) and (36), therefore making the spacing between adjacent magnets not equal and thereby resulting in shifting of the permanent magnets (22) with respect to their angular positions when the permanent magnets are equally distributed around the circumference of the rotor.

5. The external rotor electric machine as recited in claim 4, wherein adjacent magnets are angularly shifted by an electrical angle of 15 degrees.

6. The external rotor electric machine as recited in claim 4, wherein adjacent magnets are angularly shifted by an electrical angle of 30 degrees.

7. The external rotor electric machine as recited in any one of claim 1 to 4, wherein the protrusions consist of blocks of SMC - Soft Magnetic Composite.

8. The external rotor electric machine as recited in claim 7, wherein the SMC blocks (124A, 124B) are so configured and sized as to be applied to the internal surface of the rotor.

9. The external rotor electric machine as recited in claim 8, wherein the sizes of SMC blocks are such that magnets (123) having their south pole facing the stator are angularly shifted towards magnets (122) having their north pole facing the stator with respect to their angular positions when the permanent magnets are equally distributed around the circumference of the rotor.

10. The external rotor electric machine as recited in claim 9, wherein magnets (123) having their south pole facing the stator are angularly shifted towards magnets (122) having their north pole facing the stator of an electrical angle of 15 degrees.

11. The external rotor electric machine as recited in claim 9, wherein magnets (123) having their south pole facing the stator are angularly shifted towards magnets (122) having their north pole facing the stator of an electrical angle of 30 degrees.


**Patentansprüche**

1. Elektrische Maschine (10) mit Außenrotor, umfassend:

   einen Innenstator (12); und
   einen Außenrotor (18), der koaxial zum Innenstator ist; wobei der Außenrotor eine innere Oberfläche (20) aufweist, die dem Innenstator zugewandt ist; wobei der Außenrotor Dauermagnete (22), die in einer Umfangsrichtung auf der inneren Oberfläche des Rotors angeordnet sind, und magnetisch empfängliche Vorsprünge (23, 32, 34, 36), die jeweils zwischen einander benachbarten Dauermagneten angeordnet sind, aufweist; wobei die magnetisch empfänglichen Vorsprünge so gestaltet und bemessen sind, dass die Magnete mit einem ungleichen Winkelabstand zwischen aufeinanderfolgenden, einander benachbarten Magneten angeordnet sind, um ein Rastmoment und eine Drehmomentwelligkeit zu verringern,
   wobei die Vorsprünge (23, 32, 34, 36) aus einzelnen Ringsegmenten (30) bestehen, die einen mittleren Vorsprung (32), zwei laterale Vorsprünge (34, 36) und zwei Dauermagnetaufnahmeabschnitte (38, 40) einschließen, wobei jeweils ein lateraler Vorsprung (34, 36) und ein Dauermagnetaufnahmeabschnitt (38, 40) auf jeder Seite des mittleren Vorsprungs liegen,
   wobei jeder Dauermagnetaufnahmeabschnitt (38, 40) zwischen dem mittleren Abschnitt (32) und einem von den lateralen Vorsprüngen (34, 36)
   und gerundete Aussparungen (42) zwischen dem mittleren und den lateralen Vorsprüngen (32, 34, 36) und den jeweiligen Dauermagnetaufnahmeabschnitten (38, 40) liegen.

2. Elektrische Maschine mit Außenrotor nach Anspruch 1, wobei die Vorsprünge aus Stapeln von übereinanderliegenden Schichten (14) bestehen, die aus weichmagnetischem Material gefertigt sind.

3. Elektrische Maschine mit Außenrotor nach Anspruch 2, wobei die einzelnen Ringsegmente (30) so gestaltet und bemessen sind, dass sie an die innere Oberfläche des Rotors (18) passen.

4. Elektrische Maschine mit Außenrotor nach Anspruch 3, wobei der mittlere und die lateralen Vorsprünge jeweils so bemessen sind, dass der mittlere Vorsprung (32) eine Breite aufweist, die größer ist als die kombinierte Breite der lateralen Vorsprünge (34) und (36), wodurch der Abstand zwischen einander benachbarten Magneten nicht gleich ist, was zur Folge hat, dass die Dauermagnete (22) bezüglich ihrer Winkelstellungen versetzt sind, wenn die Dauermagnete gleichmäßig um den Umfang des Rotors herum verteilt sind.

5. Elektrische Maschine mit Außenrotor nach Anspruch 4, wobei einander benachbarte Magnete um einen elektrischen Winkel von 15 Grad winkelversetzt sind.

6. Elektrische Maschine mit Außenrotor nach Anspruch 4, wobei einander benachbarte Magnete um einen elektrischen Winkel von 30 Grad winkelversetzt sind.

7. Elektrische Maschine mit Außenrotor nach einem der Ansprüche 1 bis 4, wobei die Vorsprünge aus Blöcken aus SMC - weichmagnetischem Verbundmaterial - bestehen.

8. Elektrische Maschine mit Außenrotor nach Anspruch 7, wobei die SMC-Blöcke (124A, 124B) so gestaltet und bemessen sind, dass sie an die innere Oberfläche des Rotors passen.

9. Elektrische Maschine mit Außenrotor nach Anspruch 8, wobei die SMC-Blöcke so bemessen sind, dass die Magnete (123), deren Südpol dem Stator zugewandt ist, bezüglich ihrer Winkelstellungen zu Magneten (122) hin winkelversetzt sind, deren Nordpol dem Stator zugewandt ist, wenn die Dauermagnete gleichmäßig um den Umfang des Rotors verteilt sind.

10. Elektrische Maschine mit Außenrotor nach Anspruch 9, wobei Magnete (123), deren Südpol dem Stator zugewandt ist, um einen elektrischen Winkel von 15 Grad zu Magneten (122) hin winkelversetzt sind, deren Nordpol dem Stator zugewandt ist.

**11.** Elektrische Maschine mit Außenrotor nach Anspruch 9, wobei Magnete (123), deren Südpol dem Stator zugewandt ist, um einen elektrischen Winkel von 30 Grad zu Magneten (122) hin winkelversetzt sind, deren Nordpol dem Stator zugewandt ist.

## Revendications

**1.** Machine électrique à rotor externe (10) comprenant :

un stator interne (12) ; et
un rotor externe (18) qui est coaxial par rapport au stator interne ; le rotor externe incluant une surface interne (20) qui fait face au stator interne ; le rotor externe incluant des aimants permanents (22) qui sont agencés dans une direction circonférentielle sur la surface interne du rotor, et des protubérances susceptibles magnétiquement (23, 32, 34, 36) qui sont respectivement agencées entre des aimants permanents adjacents ; les protubérances susceptibles magnétiquement étant configurées et dimensionnées de manière à permettre le positionnement des aimants selon un espacement angulaire non égal entre des aimants adjacents consécutifs de manière à réduire le couple de saillance et l'ondulation du couple,
dans laquelle les protubérances (23, 32, 34, 36) sont constituées par des segments de bague individuels (30) qui incluent une protubérance centrale (32), deux protubérances latérales (34, 36) et deux parties de réception d'aimant permanent (38, 40), une protubérance latérale (34, 36) et une partie de réception d'aimant permanent (38, 40) étant localisées sur chaque côté de la protubérance centrale,
dans laquelle chaque partie de réception d'aimant permanent (38, 40) est localisée entre la protubérance centrale (32) et l'une des protubérances latérales (34, 36),
et des encoches arrondies (42) étant ménagées entre les protubérances centrale et latérales (32, 34, 36) et les parties de réception d'aimant permanent respectives (38, 40).

**2.** Machine électrique à rotor externe telle que revendiquée selon la revendication 1, dans laquelle les protubérances sont constituées par des empilements de stratifications (14) qui sont réalisées en un matériau magnétique doux.

**3.** Machine électrique à rotor externe telle que revendiquée selon la revendication 2, dans laquelle les segments de bague individuels (30) sont configurés et dimensionnés de manière à ce qu'ils soient appliqués sur la surface interne du rotor (18).

**4.** Machine électrique à rotor externe telle que revendiquée selon la revendication 3, dans laquelle les dimensions des protubérances centrale et latérales sont telles que la protubérance centrale (32) présente une largeur qui est plus importante que la largeur combinée des protubérances latérales (34) et (36), ce qui, par conséquent, rend l'espacement entre des aimants adjacents non égal et ce qui conduit de ce fait à un décalage des aimants permanents (22) par rapport à leurs positions angulaires lorsque les aimants permanents sont répartis de façon égale sur la circonférence du rotor.

**5.** Machine électrique à rotor externe telle que revendiquée selon la revendication 4, dans laquelle les aimants adjacents sont décalés angulairement d'un angle électrique de 15 degrés.

**6.** Machine électrique à rotor externe telle que revendiquée selon la revendication 4, dans laquelle les aimants adjacents sont décalés angulairement d'un angle électrique de 30 degrés.

**7.** Machine électrique à rotor externe telle que revendiquée selon l'une quelconque des revendications 1 à 4, dans laquelle les protubérances sont constituées par des blocs en un composite magnétique doux/SMC.

**8.** Machine électrique à rotor externe telle que revendiquée selon la revendication 7, dans laquelle les blocs en SMC (124A, 124B) sont configurés et dimensionnés de manière à ce qu'ils soient appliqués sur la surface interne du rotor.

**9.** Machine électrique à rotor externe telle que revendiquée selon la revendication 8, dans laquelle les dimensions des blocs en SMC sont telles que les aimants (123) dont le pôle sud fait face au stator sont décalés angulairement en direction des aimants (122) dont le pôle nord fait face au stator par rapport à leurs positions angulaires lorsque les aimants permanents sont répartis de façon égale sur la circonférence du rotor.

**10.** Machine électrique à rotor externe telle que revendiquée selon la revendication 9, dans laquelle les aimants (123) dont le pôle sud fait face au stator sont décalés angulairement en direction des aimants (122) dont le pôle nord fait face au stator d'un angle électrique de 15 degrés.

**11.** Machine électrique à rotor externe telle que revendiquée selon la revendication 9, dans laquelle les aimants (123) dont le pôle sud fait face au stator sont décalés angulairement en direction des aimants (122) dont le pôle nord fait face au stator d'un angle électrique de 30 degrés.

FIG. 1

FIG. 2

FIG. 3

FIG - 4

Electrical degrees

------ Shifted —— Normal

F̄I̅G̲.5

Electrical degrees

------Low current, shifted —— Low current, normal
------High current, shifted —— High current, normal

F̄I̅G̲.6

FIG. 7

EP 3 198 708 B1

FIG. 8

**EP 3 198 708 B1**

**Patent documents cited in the description**

- JP 2002281722 A